## Europäisches Patentamt
## European Patent Office
## Office européen des brevets

(19)

(11) Publication number: **0 150 991 B1**

(12)

# EUROPEAN PATENT SPECIFICATION

(45) Date of publication of patent specification: **02.01.92**

(51) Int. Cl.⁵: **H04N 3/12**, G09G 3/20, G09G 3/06, G09F 9/313

(21) Application number: **85300469.5**

(22) Date of filing: **24.01.85**

(54) **Video display apparatus.**

(30) Priority: **27.01.84 JP 13878/84**

(43) Date of publication of application: **07.08.85 Bulletin 85/32**

(45) Publication of the grant of the patent: **02.01.92 Bulletin 92/01**

(84) Designated Contracting States: **DE FR GB IT NL**

(56) References cited: **EP-A- 0 025 999**

(73) Proprietor: **SONY CORPORATION 7-35 Kitashinagawa 6-Chome Shinagawa-ku Tokyo 141(JP)**

(72) Inventor: **Watanabe, Yuji c/o Sony Corporation Patents Division 7-35, Kitashinagawa 6-chome Shinagawa-ku Tokyo(JP)**
Inventor: **Endoh, Yasuyuki c/o Sony Corporation Patents Division 7-35, Kitashinagawa 6-chome Shinagawa-ku Tokyo(JP)**

(74) Representative: **Thomas, Christopher Hugo et al D Young & Co 10 Staple Inn London WC1V 7RD(GB)**

EP 0 150 991 B1

## Description

This invention relates to video display apparatus comprising a display device including a plurality of display cells arranged in an X-Y matrix.

A video display device in which display cells are arranged in a 2-dimensional X-Y matrix form and the display cells are respectively driven by desired data to display a desired picture has been previously proposed.

We have proposed as a display cell usable in such a video display device the following.

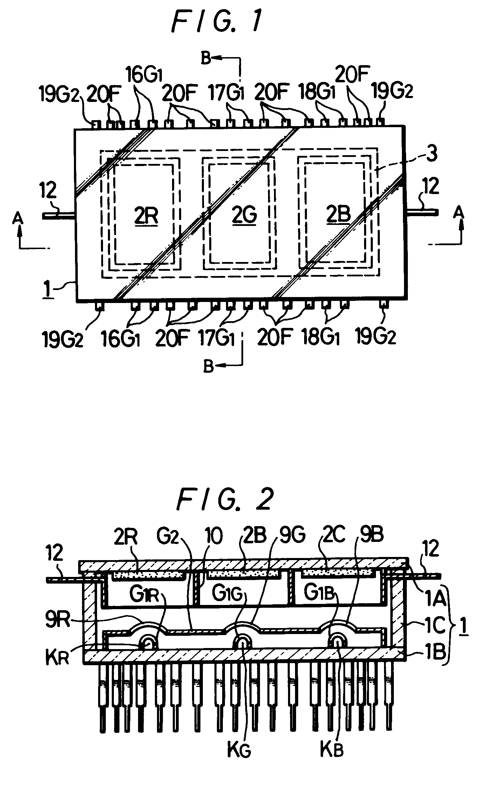

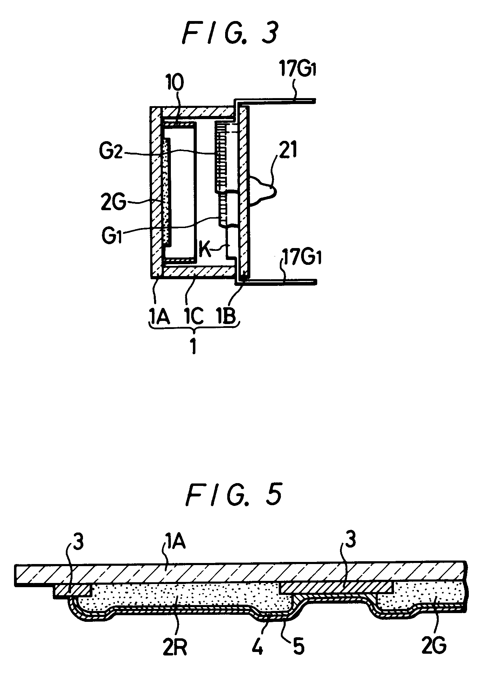

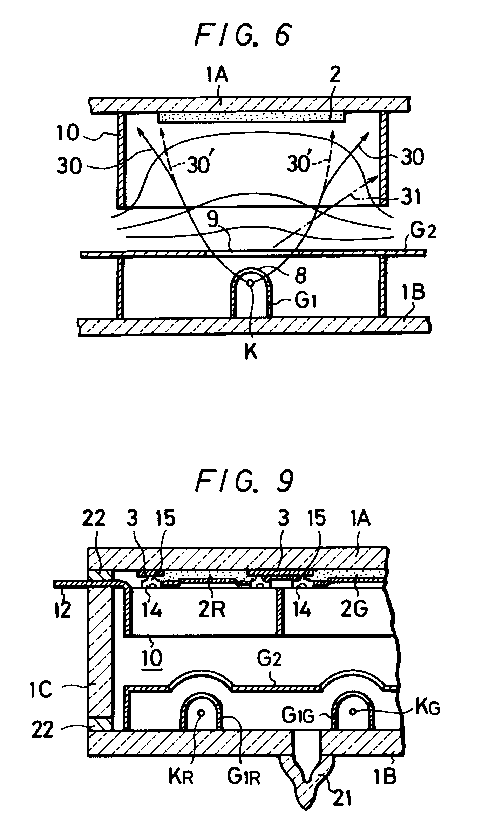

Referring to Figures 1 to 4 of the accompanying drawings, these show a front view of a luminescent display cell, a sectional view taken on line A-A of Figure 1, a sectional view taken on line B-B of Figure 1 and a partially cut-away perspective view of the cell. The cell comprises a glass envelope 1 comprising a front panel 1A, a rear plate 1B and a side wall 1C. Within the glass envelope 1 are disposed a plurality of luminescent display segments 2 (2R, 2G, 2B), a plurality of cathodes K ($K_R$, $R_G$, $K_B$) and first grids $G_1$ ($G_{1R}$, $G_{1G}$, $G_{1B}$) in corresponding relation to each display segment 2, and a common second grid (accelerating electrode) $G_2$. The display segments 2 each comprise a phosphor layer formed on the inner surface of the front panel 1A. There are three display segments 2R, 2G and 2B for red, green and blue luminescence, respectively. More particularly, as shown in Figure 5 of the accompanying drawings, a carbon layer 3 forming a conductive layer is printed in the form of a frame on the inner surface of the front panel 1A. In spaces in the frame, red, green and blue phosphor layers respectively forming the display segments 2R, 2G and 2B are formed by printing so as to overlap the carbon layer 3. Overlying the surfaces of these phosphor layers a metal back layer 5 is formed, for example an aluminium layer, over a filming layer 4. In opposed relation to the display segments 2R, 2G and 2B comprising the above phosphor layers and inside the rear panel 1B are positioned wire cathodes K ($K_R$, $K_G$ and $K_B$), first grids $G_{1R}$, $G_{1G}$ and $G_{1B}$ opposite respective wire cathodes K, and the second grid $G_2$ in common to the three first grids $G_{1R}$, $G_{1G}$ and $G_{1B}$. Each wire cathode K is formed, for example, by coating the surface of a tungsten heater with carbonate as an electron emissive material.

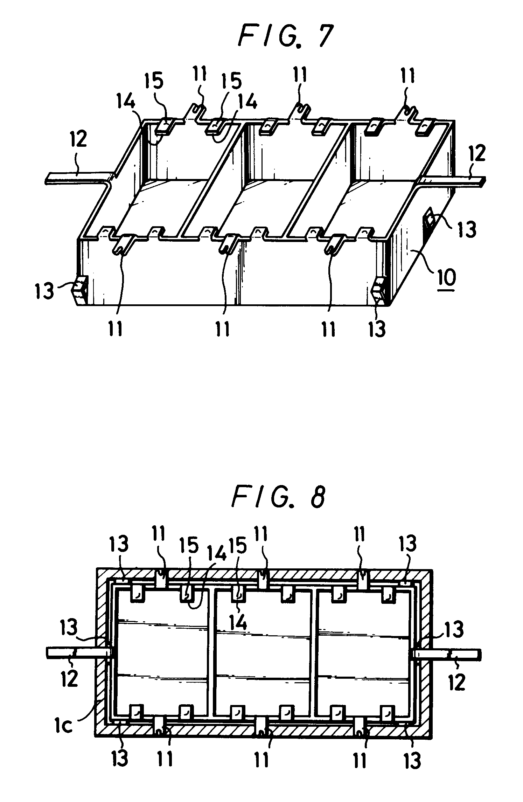

The wire cathodes K are each stretched between a pair of conductive support members 6 and 7 which are disposed on respective side portions of the rear panel 1B. One support member 6 is for fixing one end of each wire cathode K, while the other support member 7 is provided with a spring portion 7a to which is fixed the other end of each wire cathode K. With this arrangement, an even extension of the wire cathode K due to a rise of temperature would be absorbed by the spring portion 7a, and thus the wire cathode K never becomes loose. The first grids $G_{1R}$, $G_{1G}$ and $G_{1B}$ are formed in a half -cylindrical shape having a cylindrical surface in corresponding relation to the wire cathodes K, and a plurality of slits 8 are formed in the cylindrical surface at a predetermined pitch along the longitudinal direction of the same surface. The slits 8 are for the transmission therethrough of electrons radiated from the wire cathode K. The second grid $G_2$ is formed with slits 9 in portions corresponding to the first grids $G_{1R}$, $G_{1G}$ and $G_{1B}$, and in positions corresponding to the slits 8 of the first grids $G_{1R}$, $G_{1G}$ and $G_{1B}$. In this case, slit portions 9R, 9G and 9B of the second grid $G_2$ may be formed so as to have cylindrical surfaces concentric with the corresponding first grids $G_{1R}$, $G_{1G}$ and $G_{1B}$. In this construction, electron beams from the wire cathodes K are radiated rectilinearly through the slits 8 and 9 of the first and second grids $G_1$ and $G_2$ and are spread with respect to the longitudinal direction of the slits 8 and 9. On the other hand, the portions of the second grid $G_2$ in which are formed the slits 9 may be horizontal as shown in Figure 6 of the accompanying drawings. In this case, the electron beam is radiated so that it passes through the second grid $G_2$ and then is curved somewhat inwardly with respect to the longitudinal direction of the slits 8 and 9, as shown by a dotted line 30'.

On the other hand, a separator 10 formed of a conductive material is disposed to surround the display segments 2R, 2G and 2B. The separator 10 not only serves as a shield for preventing secondary electrons 31 (see Figure 6) induced by impingement of electron beams 30 from the wire cathodes K on the first or second grid $G_1$ or $G_2$ from rendering an adjacent display segment 2 luminous, but also serves to form a diffusion lens which functions to spread the electron beam 30 from each wire cathode K so that the electron beam 30 is radiated throughout the corresponding display segment 2. In addition, the separator 10 is used as power supply means for supplying a high voltage, for example 10 KV, to each display segment 2.

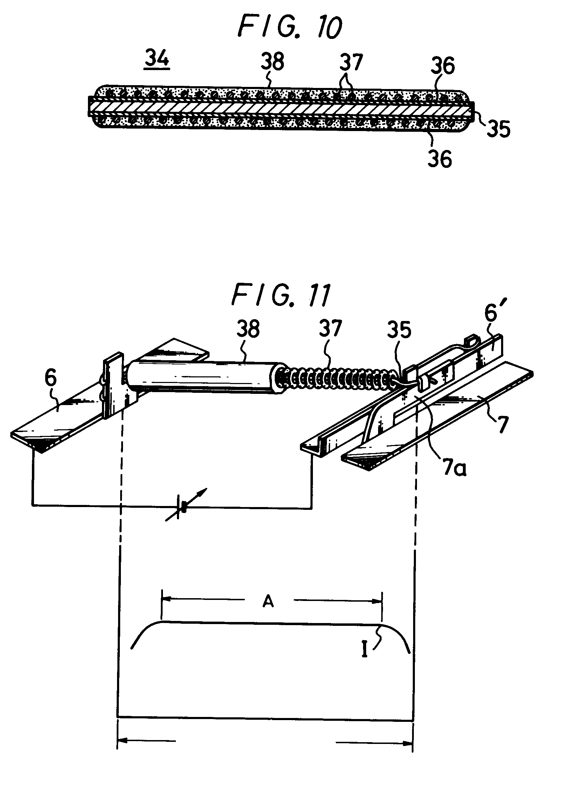

In assembling, the separator 10 is supported between the front panel 1A and a side wall 1C of the glass envelope 1 and fixed by frit. More specifically, as shown in Figure 7 of the accompanying drawings, the separator 10 is in the form of a frame partitioned in threes to surround the display segments 2, and on first opposed upper ends thereof are formed outwardly projecting supporting pieces 11, while on the other opposed upper ends are formed anode leads 12 for the supply of high voltage (anode voltage). Furthermore, on the side portions of the separator 10 are formed outwardly bent resilient positioning pieces 13. When the separator 10 is inserted from above into the inside of the side wall 1C, as shown in Figure 8 of the accompanying drawings, the supporting pieces 11 abut the upper end face of the side wall 1C thereby to support the separator 10, and at the same time the bent portions 13 abut the inner surface of the side wall 1C thereby to position the separator 10 in central fashion.

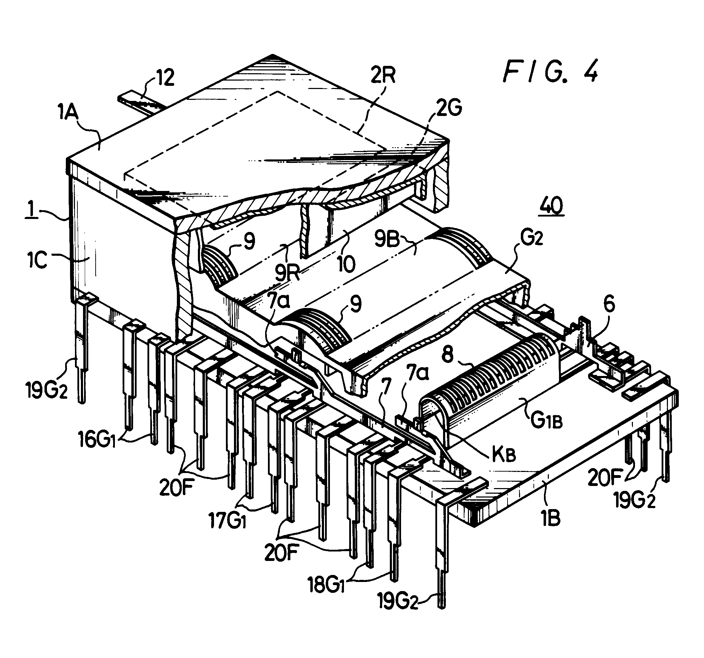

Also provided on the upper end portion of the separator 10 are inwardly bent lugs 14 each having a projection 15 formed on the surface thereof. When the front panel 1A is placed and sealed on the side wall 1C after enclosing the separator 10 in the side wall 1C, the projections 15 contact the carbon layer 3 or the metal back layer 5 (see Figure 9 of the accompanying drawings). As a result, the high voltage from the anode leads 12 is fed in common to the display segments 2R, 2G and 2B. In an assembled state, the anode leads 12 to which are applied the high voltage are taken out to the exterior through the sealed portion between the front panel 1A and the upper end face of the side wall 1C, while the leads of the wire cathodes K, the first grid $G_1$ and the second grid $G_2$ are taken out to the exterior through a sealed portion between the rear plate 1B and the side wall 1C. The leads of the cathodes K, the first grids $G_1$ and the second grid $G_2$ are brought out together for supporting purposes. For example, in each of the first grids $G_{1R}$, $G_{1G}$ and $G_{1B}$, two leads on each side, namely, a total of four leads on both sides, are brought out as leads $16G_1$, $17G_1$, and $18G_1$ - (see Figure 4). In the case of the second grid $G_2$, four leads $19G_2$ are brought out corresponding to the four corners of the rear panel. Leads 20F of the wire cathodes K are brought out together to the right and left from both support members 6 and 7. The leads, 20F of the wire cathodes K are connected in common for each of the support members 6 and 7. Also with respect to each of the first and second grids $G_1$ and $G_2$, the corresponding leads are connected in common.

The glass envelope 1 is provided by sealing the front panel 1A, the side wall 1C and the rear plate 1B with respect to each other by frits 22 (see Figure 9). To the rear plate 1B a chip-off pipe 21 for gas exhaust is fixed by frits.

Operation of the above display device will now be explained. An anode voltage of, say, 10 KV or so is supplied through the anode leads 12 to the red, green and blue display segments 2R, 2G and 2B. To each of the first grids $G_{1R}$, $G_{1G}$ and $G_{1B}$ is applied a voltage of, say, 0 to 30V, while to the second grid $G_2$ is applied a voltage of, say, 300V. The wire cathodes $K_R$, $K_G$ and $K_B$ are of 60 to 70 mW or so each. In this construction, the anode side and the second grid $G_2$ are fixed in voltage, while the voltage applied to the first grids $G_1$ is changed to turn on and off the display segments 2 selectively. More particularly, when OV is applied to a first grid $G_1$, an electron beam from the wire cathode K is cut off and the corresponding display segment 2 is not rendered luminous. When, say, 30V is applied to a first grid $G_1$, an electron beam 30 from the wire cathode K passes through the first grid $G_1$, is then accelerated by the second grid $G_2$ and impinges upon the phosphor of the corresponding display segment 2 to make it luminous. At this time, the luminance is controlled by controlling the pulse width (duration) of the voltage (30V) applied to the first grid $G_1$. Further, as shown in Figure 6, the electron beam 30 from the wire cathode K is spread by the separator 10 and radiated to the entire surface of the display segment 2. When the electron beam 30 from the wire cathode K impinges upon the first and second grids, $G_1$ and $G_2$ there are produced the secondary electrons 31 from the grids, $G_1$ and $G_2$ but the secondary electrons 31 are obstructed by the separator 10, so they do not impinge upon the adjacent display segment 2. In this way, by selectively controlling the voltage applied to the first grids, $G_1$ the display segments 2R, 2G and 2B are selectively rendered luminous at a high luminance.

Such a luminescent display device can be made thin. Moreover, the low voltage-side leads such as the cathode and first and second grid leads are taken out from the rear plate 1B side of the glass envelope 1, while the high voltage-side anode leads 12 are taken out from the front panel 1A side. Therefore, possible dangers during discharge and wiring can be avoided, thus ensuring a stable luminescent display.

Moreover, since the anode voltage-applied separator 10 surrounds each display segment 2, a diffusion lens is formed by the separator 10. Therefore, even if only the first grids $G_1$ are curved and the second grid $G_2$ is flat (as shown in Figure 6), the electron beam 30 from the wire cathode K spreads laterally (in the direction of the slits 8 and 9) and is radiated to the entire surface of the display segment 2. At the same time, the secondary electrons 31 from the first or second grid $G_1$ and $G_2$ are obstructed by the separator 10, so the adjacent cut-off display segment 2 is not rendered luminous.

In the case of a colour display (for example, in the case of a 9300°K white picture), the luminance mixing ratio is about 7% blue, about 13% red, and about 80% green. In the case where wire cathodes are used as an electron emission source, they are in many cases used with a temperature restriction in order to prolong their service life. The problem of making the luminance of the green cathode higher than that of the other cathodes can be solved by increasing the number of green cathodes used. For example, two green cathodes $K_G$, one red cathode $K_R$, and one blue cathode $K_B$ may be used. As a result, the total number of electrons for green becomes larger than that for red and blue, thus making it possible to effect a colour display. There may also be a plurality of red and blue cathodes, which would prolong their service life. Thus, by increasing the number of green cathodes in comparison with the other cathodes, the luminance of green can be enhanced and a good white balance is obtainable. Consequently, an excessive load is not imposed on the cathodes, that is, the life of the luminescent display device can be prolonged. Actually, two green cathodes are disposed in spaced relation at a distance of about 0.8 to 1 mm. As to the number of electrons emitted, an increase of 70 to 80% can be expected; it does not become twice as large as that in the case of a single green cathode due to the electron scattering effect. Alternatively, the green luminance may be enhanced by making the area of the green phosphor layer larger than that of the red and blue phosphor layers.

Since the wire cathodes are used with a temperature restriction, that is, the loading of the oxide cathode is set at a ratio of one to several tens to prevent a reddish appearance, the number of electrons emitted per cathode is small. One method of solving this problem might be substantially to enlarge the surface area of oxide by winding a tungsten wire spirally, for example. But, in the case of a long spiral, it is likely that there will occur loosening or vibration of the cathode. In view of this, a construction as shown in Figures 10 and 11 of the accompanying drawings has been proposed.

In this example, a core 35 formed of a high-temperature material such as, for example, tungsten or molybdenum, is provided, and its surface is coated with an insulating material 36 such $Al_2O_3$. Then tungsten wire 37 serving as a heater is wound spirally thereon and an electron emissive material 38, for example carbonate, is bonded to the spiral portion by spraying or electrodeposition to form a directly heated cathode 34. The core 35 is fixed at one end thereof to one support member 6 and at the other end thereof to the spring portion 7a of the other support member 7 by spot welding or other suitable means, it being stretched under tension. The tungsten wire 37 is fixed between one support member 6 and a second support member 6' on the other side by spot welding or other suitable means.

Thus, in the above construction, the cathode is wound spirally onto the core 35 coated with the insulating material 36, and the core 35 is stretched by the spring portion 7a, whereby problems such as shorting between spiral portions and thermal deformation of the spiral can be eliminated. Moreover, the oxide surface area is substantially increased, and a uniform temperature distribution area (A) with reduced temperature difference between the ends and the centre of the cathode becomes wider. As a result, the number of electrons emitted can be increased, and as a whole, therfore, it is possible to increase the amount of allowable current per cathode. The curve 1 in Figure 11 represents a temperature distribution.

Thus, the luminescent display device is formed. In this case, since the separator supplied with the same high voltage as that applied to the display segments is positioned to surround the plurality of display segments, a diffusion lens is formed whereby an electron beam from the cathode is spread laterally and radiated to the entire surface of each display segment or element. Consequently, it is possible to make a high luminance display. Moreover, by the presence of the separator, secondary electrodes from a control electrode or accelerating electrode are obstructed, not rendering the adjacent cut-off display segment luminous, and thus a stable luminescent display can be effected.

When a picture display apparatus is formed by using the above luminescent display devices, the following assembly method is used.

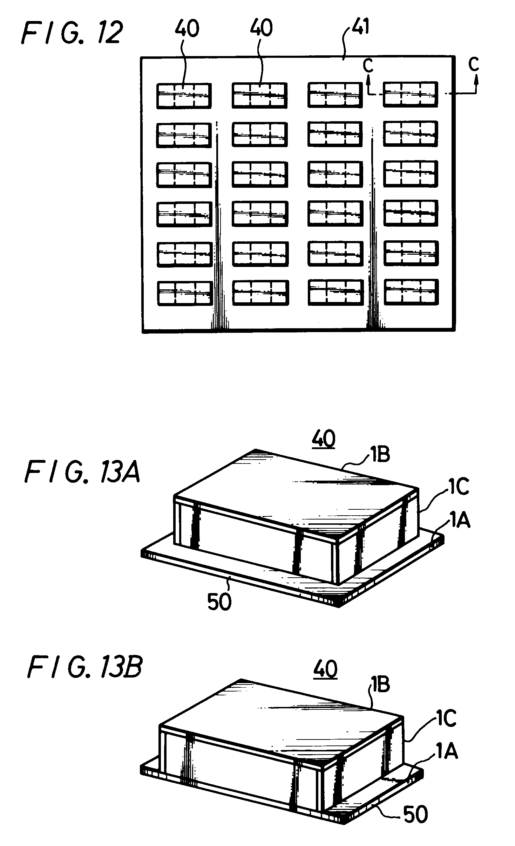

A plurality of the above luminescent display devices or cells 40, for example, 6 (column) x 4 (row) = 24 luminescent display cells 40 are incorporated in a unit case 41 to form one unit as shown in Figure 12 of the accompanying drawings. In mounting the plurality of display cells in the unit case 41, the display cells 40 are fixed to the case 41 by moulding for example with resin. However, the anode voltage of the display cell 40 is as high as about 10 KV, so if the fixing is incomplete, the display cell 40 may become separated upon application of power, or the application of a liquid for example for stains on the surface side. A change in conditions may also cause such separation. Therefore, it is necessary to fix the display cells 40 firmly to the case 41.

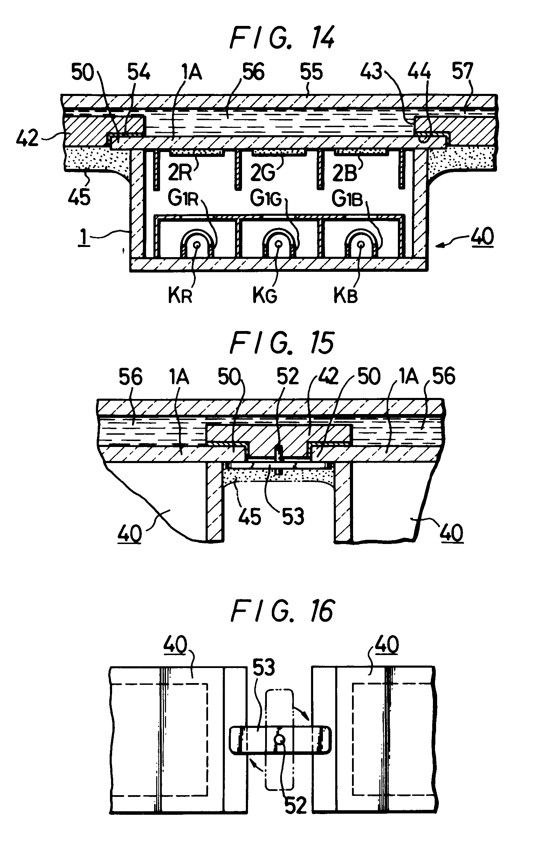

For this purpose, each display cell 40 is formed so that the front panel 1A of the glass envelope 1 overhangs outwardly beyond the side wall 1C. The front panel 1A may overhang throughout the circumference as shown in Figure 13A of the accompanying drawings, or it may overhang only in one direction as shown in Figure 13B of the accompanying drawings. On the other hand, the case 41 is constructed as shown in Figure 14 of the accompanying drawings, that is, a plurality of (24 in the illustrated embodiment) window holes 43 are formed in a front plate 42 of the case 41 in opposed relation to the display cells 40, and a stepped portion 44 in which is to be fitted the marginal portion of the front panel 1A of each display cell 40 is formed in the back of the marginal portion of each window hole 43. The display cell 40 is fitted in the back of the front plate 42 so that its front panel 1A faces the window hole 43, and is then fixed from the back by the use of a fixing member 45, for example a resin mould.

Since the front panel 1A overhangs outwardly as an overhang portion 50, the overhang portion 50 is held between the fixing member 45 and the front plate 42 of the case 41, and thus, as a whole, the display cell 40 is fixed firmly to the case 41. If necessary, as shown in Figures 15 and 16 of the accompanying drawings, there may be provided a retaining piece 53 which is rotatable about a shaft 52 to hold the overhang portion 50 of the front panel 1A of each display cell 40 between it and the front plate 42 of the case 41. Subsequent fixing for example with moulded resin will further ensure the fixing of the display cell 40. Since the display cell 40 is of a high luminance, the front panel side with phosphor layers applied thereto is apt to become hot, so it is necessary to cool it, for example, with liquid. For this purpose, at the time of mounting each display cell 40 in the case 41, a packing 54, for example of silicone rubber, is interposed between the stepped portion 44 of the front plate 52 of the unit case 41 and the front panel 1A, and a transparent plate 55 formed of polycarbonate or other material is disposed thereabove, and the space formed by the transparent plate 55, the front panel 1A and the window hole 43 of the unit case 41 is filled with a cooling liquid 56. The front plate 42 of the case 41 is formed with slots 57 for introducing the cooling liquid 56 and communicating with the window holes 43. Instead of using the cooling liquid 56, a fan may be provided for air-cooling the display cell 40.

Then, a plurality of the above unit cases 41 are arranged in an X-Y matrix form, for example, 7 (column) x 5 (row) = 35 to form a block and then 5 blocks are arranged laterally to form a sub-module. Then, a plurality of the sub-modules are combined in an X-Y matrix form, for example, 9 (column) x 4 (row) = 36. By using a plurality of the sub-modules, a jumbo-sized picture display apparatus of, for example, 25 m (column) x 40 m (row) can be constructed. In this case, the number of the display cells 40 is:

$$36 \times 5 \times 35 \times 24 = 151,200$$

and the number of the display segments 2 is three times the above number and hence about 450,000.

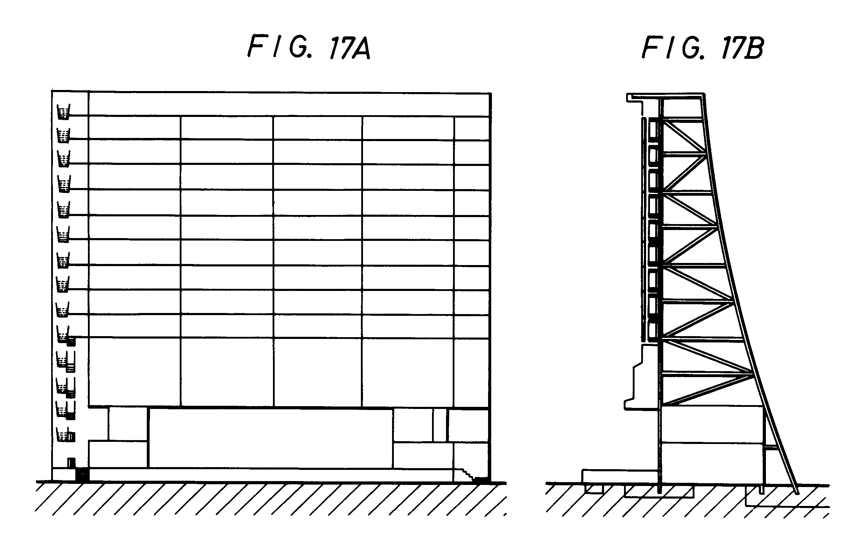

Figures 17A and 17B of the accompanying drawings are respectively a front view and a cross-sectional view of whole of a built-up jumbo-sized picture display apparatus. The whole of this jumbo-sized picture display apparatus is a building which is, for example, 42 m in height and 47 m in width. The upper portion of the building is made as a display portion which is provided with 9 floors, each floor having a height of 2.688 mm. On each floor there are located 4 sub-modules in the lateral direction. Moreover, on the lower portion of the building there may, for example, be formed a stage for entertainments, an anteroom, and a central control room for operating and managing the display apparatus and the stage.

In this case, since 24 luminescent display cells 40 a unit and a plurality of the units are employed to assemble the whole picture display apparatus, the display apparatus becomes easy to handle and also easy to assemble. In this case, each unit is formed a 40 cm square shape.

In such a picture display apparatus, when the display signal for each display cell 40 is transmitted, it is impossible to perform the signal transmission in parallel for about 450,000 picture display segments 2. Thus, the signal transmission is carried out by a scanning method. In this case, however, the structure of the display apparatus is of a unit utilization type, and if the known line-sequence scanning is employed, a large number of connections between the respective units in the lateral direction is required and the installation thereof becomes complicated.

Moreover, if the display apparatus is jumbo-sized as described above, and if the signal transmission is carried out in an analog fashion, errors such as a cross-talk and time-base error are easily caused. Thus, it might be considered that the signal should be transmitted in the form of a digital signal. However, if a flat cable is used as the transmission line, the transmission speed is generally restricted to about 300 kHz. On the other hand, the time available to send the signal to the whole picture screen is limited to about 1/30 second.

Moreover, the display apparatus described above is generally installed outside. In that case, depending on the lighting (day or night), and on weather conditions, such as fine weather, cloudy weather or rainy weather, the ambient brightness changes, so the appropriate brightness of the display becomes different. For example, when the appropriate brightness of the display is determined on the basis of the brightness of a fine day, the brightness is too high at night, so that it becomes impossible to see the display satisfactorily. Therefore, brightness control is carried out, and in that case, if the brightness steps of the display are decreased upon low brightness, it becomes impossible to display the picture image with high quality.

According to the present invention there is provided a video display apparatus comprising:

a display device including a plurality of display cells arranged in an X-Y matrix form;

a video signal source for supplying a digital video signal;

a pulse width modulator connected to said video signal source for deriving a pulse width modulated signal corresponding to the brightness level of said digital video signal, said pulse width modulator including a counter supplied with said digital video signal as a datum signal and a clock signal generator for supplying a clock signal to said counter; and

signal supplying means connected to said pulse width modulator for supplying said pulse width modulated signal to said display device and reproducing a picture thereon;

characterized by:

control means connected to said clock signal generator for changing the frequency of the clock signal supplied to the counter to control the brightness of the picture reproduced on said display device.

The invention will now be described by way of example with reference to the accompanying drawings, throughout which like parts are referred to by like references, and in which:

Figure 1 is a front view of a luminescent display cell used in embodiments of the present invention;

Figure 2 is a sectional view taken on line A-A of Figure 1;

Figure 3 is a sectional view taken on line B-B of Figure 1;

Figure 4 is a partially cut-away perspective view of the luminescent display cell in Figure 1;

Figure 5 is an enlarged sectional view of a display segment;

Figure 6 is a sectional view illustrative of operation of a separator;

Figure 7 is a perspective view of the separator;

Figure 8 is a plan view in which the separator is disposed within a side of an envelope;

Figure 9 is a sectional view of display segments and a separator;

Figure 10 is a sectional view showing another example of a wire cathode;

Figure 11 is a perspective view showing the mounting of the cathode of Figure 10;

Figure 12 is a front view of a single unit incorporating a plurality of display cells;

Figures 13A and 13B are perspective views showing other examples of display cells;

Figure 14 is a sectional view taken on line C-C of Figure 12;

Figure 15 is a sectional view showing another mounting method;

Figure 16 is a rear view thereof;

Figures 17A and 17B are respectively a front view and a cross-sectional view of a built-up jumbo-sized display apparatus;

Figure 18 is a block diagram showing an embodiment of video display apparatus according to the present invention;

Figures 19 and 21 are schematic diagrams respectively showing a signal supplying system for the embodiment;

Figures 20A to 20G are waveform diagrams for explaining the embodiment;

Figure 22 is a schematic diagram showing a pulse width modulation driving circuit for the embodiment; and

Figure 23 is a circuit block diagram showing a practical example of a timing generator circuit used in the embodiment.

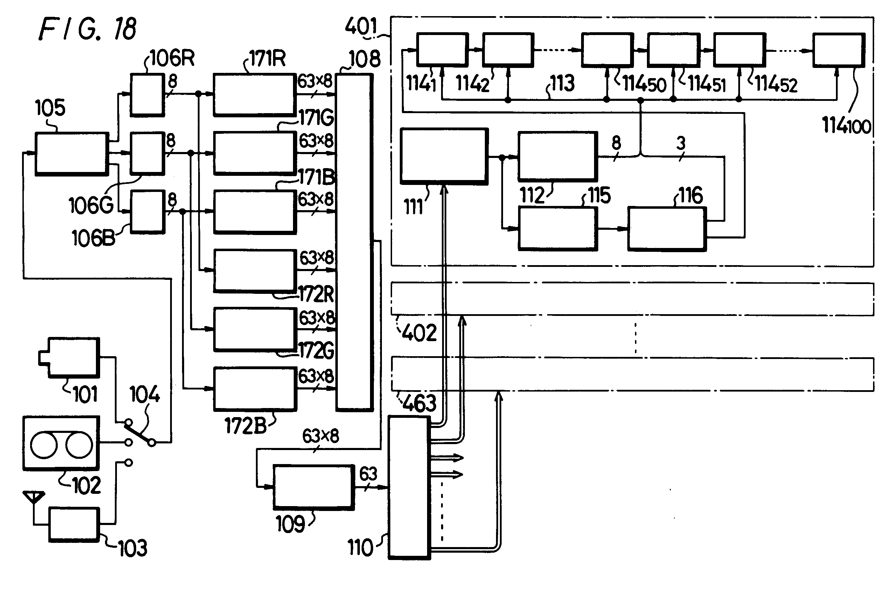

Figure 18 is a block diagram showing an embodiment of the video display apparatus according to the present invention. In this embodiment the video signals from a television camera 101, a video tape recorder (VTR) 102, or a tuner 103 selected by an input change-over switch 104. These video signals are each a composite video signal of, for example, the NTSC system. The video signal selected by the switch 104 is supplied to a decoder 105 in which it is decoded to three colour component signals of red, green and blue. these three colour component signals are respectively supplied to analog to digital (A/D) converters 106R, 106G and 106B and converted to 8-bit parallel digital signals, respectively.

These digital signals are supplied alternately to memories 171 (171R, 171G, 171B) and memories 172 (172R, 172G, 172B) each of which has one field capacity. The memories 171 and 172 each form a scanning converter which provides four horizontal lines from five horizontal lines. Further, for 189 horizontal lines, for example, selected from each field of the scanning converted signal, there are derived one output at every three horizontal lines, totally 63 (x 8 bit parallel) outputs.

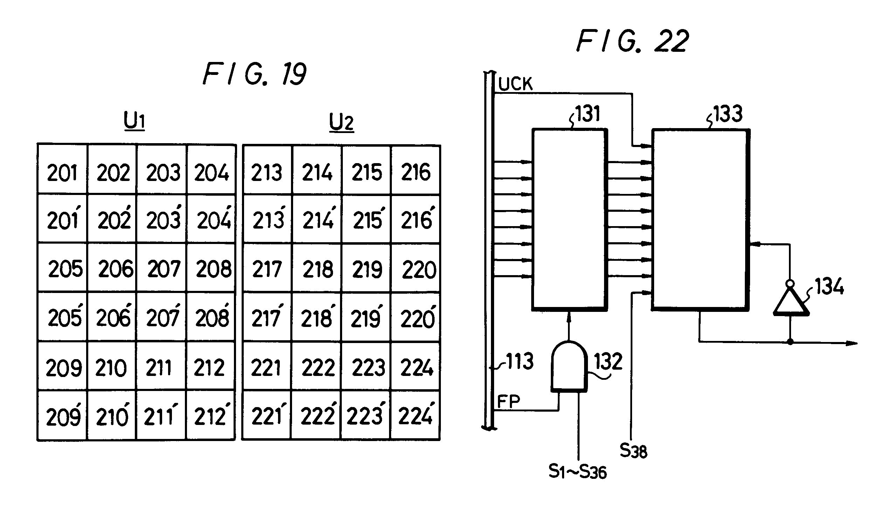

The order of deriving the signal from the scanning converter is a specific one, such that after the supply of the signal to one of the units described previously has been completed, the supply of the signal to the next adjacent unit will be done. That is, as shown in Figure 19, when there are two adjacent units $U_1$ and $U_2$, in one field the digital data for a segment corresponding to each cell is sequentially derived from one memory in the numbered order, and after the segment data corresponding to three horizontal lines comprising cells 201 to 204, 205 to 208 and 209 to 212 in the left unit $U_1$ have been completely derived, the segment data corresponding to three horizontal ines of cells 213 to 216, 217 to 220 and 221 to 224 in the right unit $U_2$ are derived. Then, the derivation of the segment data is shifted to the right side unit successively. The segment data corresponding to the horizontal lines of cells marked by the corresponding numbers with a dash in Figure 19 are derived from the other memory in the next field by interlace scanning.

These segment data are derived at the same time from the respective memory 171 or 172, respectively. This data deriving is carried out such that 63 data at every three lines are simultaneously derived. The data thus derived are supplied to a data selector 108 in which at every field the red, green and blue data are dot-sequentially selected from the memory in which no writing is carried out thereby to form the data signal of 63 (x 8 bit parallel). The data signals so formed are fed to a multiplexer 109 in which 8-bit parallel signals are respectively converted to serial data signals. The signals thus converted are supplied to an optical converter 110 and converted thereby to the corresponding optical signal.

The optical signals of 63 data at every three horizontal lines are transmitted through optical-fibre cables 301, 302, ... 363 to centre portions of lateral groups 401, 402, ... 463 respectively where each group represents the total units of the display apparatus arranged laterally.

Then, for example, in the uppermost group 401 of the units, the optical signal from the optical-fibre cable 301 is fed to a photo-electric converter 111 and converted thereby to the corresponding electrical signal. This converted data signal is supplied to a demultiplexer 112 in which the serial data signal is converted to the 8-bit parallel signal. This parallel data signal is supplied at the same time through a bus line 113 to, for example, 100 units $114_1, 114_2, ... 114_{100}$, which are laterally arranged, in parallel.

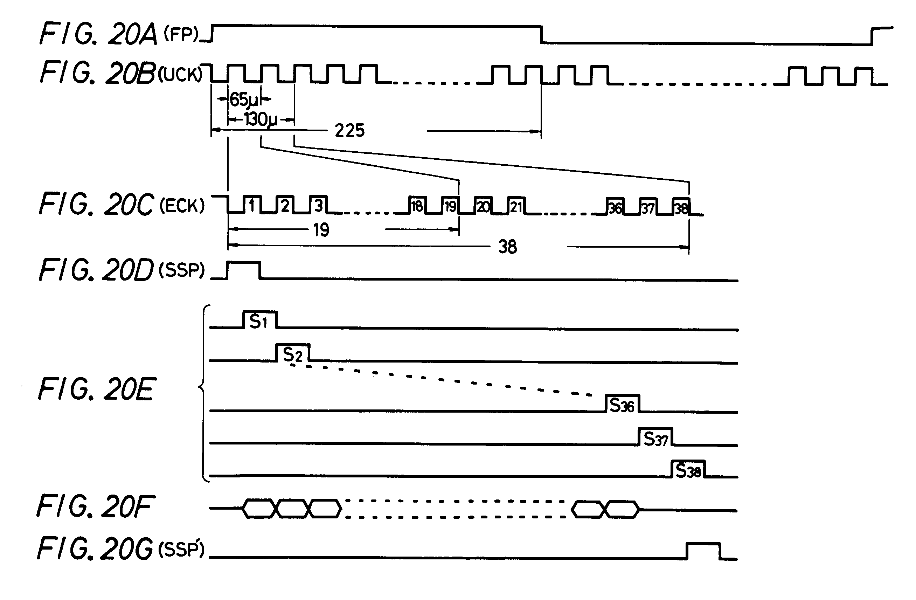

The signal from the photo-electric converter 111 is further supplied to a sync separator 115 in which synchronizing signals are formed by a predetermined pattern generator. The synchronizing signals therefrom are fed to a timing generator circuit 116 in which there are respectively generated a frame pulse signal FP which is inverted at every field as shown in Figure 20A, a unit clock signal (UCK) which has 255 cycles during a half period (one field) of the frame pulse signal as shown in Figure 20B, an element clock signal ECK which contains 38 cycles during two cycles of the unit clock signal UCK as shown in Figure 20C, and a start pulse SSP which is formed by one element clock signal amount at every inversion of the frame pulse signal as shown in Figure 20D. The frame pulse signal FD, unit clock signal UCK and element clock signal ECK are supplied together with the above data signal through the bus line 113 to the respective units $114_1, 114_2, ... 114_{100}$ in parallel while the start pulse is supplied to the first unit $114_1$.

Operation similar to the above is carried out in each of the 63 groups 401, 402, ... 463.

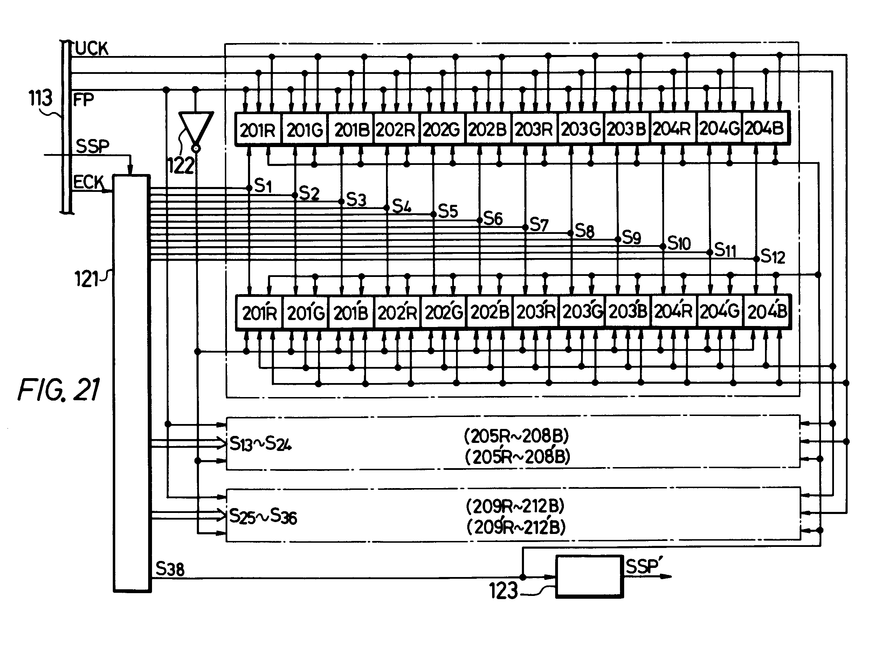

In each of the units above, the signal translating circuit is formed as shown in Figure 21 and comprises a shift register 121 having 38 stages. In this case, the element clock signal ECK from the timing generator circuit 116 through the bus line 113 is supplied to the clock input terminal of the shift register 121 and the start pulse SSP is supplied to its data input terminal. Then, from the respective stages of the shift register 121 there are delivered sequentially shifted signals $S_1, S_2, ... S_{38}$ as shown in Figure 20E. The signals $S_1$ to $S_{36}$ are respectively supplied to the display segments or elements 201R, 201G, 201B, 202R, 202G, 202B, ... 212R, 212G, 212B of each of the cells 201 to 212 and to elements 201'R, 201'G, 201'B, 202'R, 202'G, 202'B, ... 212'R, 212'G, 212'B of each of the cells 201' to 212'. In Figure 21, the circuits in one-dot chain line block are equivalent with one another.

The data signals, as shown in Figure 20F, from the bus line 113 are supplied to all the elements 201R to 212'B in parallel. The frame pulse signal FP is supplied to the elements 201R to 212B and to the elements 201'R to 212'B after being reversed in phase by an inverter 122.

The signal $S_{38}$ from the shift register 121 is supplied to a D-type flip-flop 123 which then produces a start pulse signal SSP' to be supplied to the next adjacent unit as shown in Figure 20G.

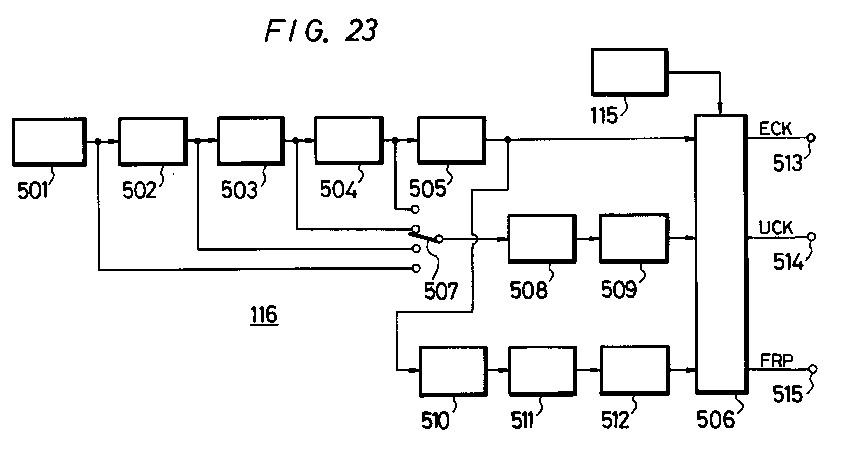

The signal circuit which will drive each element is constructed as shown in Figure 22 and comprises an 8-bit latch circuit 131 which is supplied at its data input terminals with the data signal from the bus line 113. An AND circuit 132 is provided which is supplied with the frame pulse signal FP or its inverted signal and one of the signals $S_1$ to $S_{36}$. The output from the AND circuit 132 is supplied to the control terminal of the latch circuit 131. An 8-bit down counter 133 is provided which is supplied at its preset terminals with the output from the latch circuit 131, at its load terminal with the load pulse (signal $S_{38}$) from the shift register 121 and at its clock input terminal with the unit clock signal UCK from the bus line 113, respectively. When the counter 133 is in a condition other than the all-zero condition, it produces an output signal which is supplied to the first grid $G_1$ of each element mentioned above. The output signal of the counter 133 is phase-inverted by an inverter 134 and then supplied to the count-stop terminal of the counter 133.

Accordingly, in each element of each unit, at the times of the signals $S_1$ to $S_{36}$, the data from the bus line 113 are latched in the latching circuit 131 of the corresponding element and then held therein. The data held therein are preset to the counter 133 at the time of the signal $S_{38}$. The preset data are then counted down until the counter 133 reaches the all-zero condition, so that at the output terminal of the counter 133 there is developed the pulse width modulated signals in accordance with each data signal. In this case, the counter 133 counts down the preset data in response to the unit clock signal UCK. Since this unit clock signal has 25 cycles during one field period, when the data has the largest value, a display element is displayed during one field period continuously, while when the data has the smallest value, the display element is not displayed so that the display therebetween can be divided into 256 brightness steps. The first grid $G_1$ of each element can be driven by the pulse width modulated signal.

Moreover, at the time of the signal $S_{38}$ the start pulse signal for the next adjacent unit is produced. Thereafter, an operation similar to the above operation is sequentially carried out for 100 units arranged laterally. Moreover, the data latching operation of each unit is performed during the 2-cycle period of the unit clock signal UCK so that such operation for 100 unit arranged laterally is completed in 200 cycles. Therefore, by utilizing the remaining 55 cycles, special control signals such as the synchronizing signal and so on can be transmitted.

Since in the next field the frame pulse signal FP is inverted in phase, a similar operation is carried out for the other picture elements of the interlace scanning. At this time, the preset pulse is supplied to the picture elements which were driven in the previous field, so that the same display is performed twice on each picture element during the successive 2 field intervals.

Thus, the displays are performed on 100 units which are arranged laterally. Further, such display is performed for the 63 vertical direction groups of units in paralle at the same time, whereby a whole picture is displayed.

Moreover, in the above display device, the timing generator circuit 116 is formed as shown in Figure 23. In Figure 23, a signal of, for example, 4.646549 MHz from a reference oscillator 501, which may be a crystal oscillator is supplied to four 1/2 frequency dividers 502 to 505 which are connected in cascade, from which a signal of about 300 kHz is derived, and is then supplied to a latch circuit 506. The respective output signals from the reference oscillator 501 and the frequency dividers 502 to 504 are supplied to a switch 507 and the signal from the switch 507 is supplied through a 1/19 frequency divider 508 and a 1/2 frequency divider 509 to the latch circuit 506. The signal from the frequency divider 505 is supplied through a 1/19 frequency divider 510, a 1/255 frequency divider 511, and a 1/2 frequency divider 512 to the latching circuit 506. The synchronizing signal from the synchronizing separator 115 is supplied to the latch circuit 506, in which the synchronization is carried out.

In this timing generator circuit 116, an element clock (ECK) of about 300 kHz is derived from the frequency divider 505 and supplied to the latch circuit 506 thereby synchronized to the synchronizing signal, and then supplied to a terminal 513. A frame pulse (FP) having a period of 255 x 38 times the period of the element clock is derived from the frequency divider 512, synchronized to the synchronizing signal and then supplied to a terminal 515.

When the movable contact of the switch 507 is connected to the uppermost contact, the frequency divider 509 forms a unit clock (UCK) having a period 19 times the period of the element clock. Then, this unit clock is synchronized to the synchronizing signal in the latching circuit 506, and then supplied to a terminal 514, while when the movable contact of the switch 507 is changed in position, the frequency of the unit clock is sequentially changed so as to become 2,4 and 8 times the first frequency.

When these signals are supplied to the clock terminal of the down counter 133, as the frequency is increased, the length of the pulse width modulated pulse is sequentially changed to 1/2, 1/4 and 1/8, respectively.

Accordingly, the brightness to be displayed is controlled to become 1/2, 1/4 and 1/8, respectively. At that time, the number of brightness steps due to the pulse width modulation is still in a range from 0 to 255 and it is possible to prevent the number of the brightness steps from being decreased by the brightness control.

Thus, a jumbo-sized picture of, for example, 25 m (column) x 40 m (row) is displayed. With the above picture display apparatus, since the data are sequentially transmitted at every unit and after the data transmission of one display unit is completed, the data of the next adjacent display unit is transmitted, the display operation is completed at each unit. As a result, the wiring between the respective units only requires one line to transmit the start pulse SSP' from one unit to the next unit, so that the connections become quite simple. The supply of the data signal and so on from the bus line to each unit can be performed by using a multi-contact connector.

Therefore, when the units are attached or exchanged, the work becomes simple and the assembling and repairing thereof become quite easy. For example, if one unit becomes out of order, it is sufficient that the unit is exchanged for a new good unit. Upon this exchange, since the number of lines for electrical connection is small, the exchange can be done rapidly and easily. Moreover, risk of trouble caused, for example, by a contact miss can be reduced.

Moreover, as an emergency measure, it is sufficient that a counter which can count up to 38 is connected between the input and output terminals for the start pulse of an inoperative unit and then this inoperative unit is removed. In this case, there is no adverse effect on the other units. Furthermore, when the operation of a certain unit is to be checked, since the signal is completed within the unit, the check is very easy.

Also, since the data is transmitted in parallel to every laterally arranged unit, the transmission speed is made low. That is, the data transmission speed in the above embodiment becomes as follows:

$$60 \times 255 \times \frac{38}{2} = 290.7 \ (\text{kHz})$$

This speed is lower than the tolerable range (300kHz) of a flat cable (bus line), so that a conventional flat cable can be used.

Further, the data transmission is such that the data of 2-field amounts of the interlace scanning are transmitted in one frame interval and the data is rewritten only once in each picture element at one frame interval. However, the display is repeated in two sequential fields and the display frequency is 60 Hz, so that the generation of flicker can be suppressed.

Furthermore, in the above display apparatus, by changing the frequency of the clock pulse of the pulse width modulation, it is possible to carry out brightness control very easily, whereby regardless of the weather conditions, a display with the appropriate brightness can be provided at all times. Moreover, it is possible to prevent the number of the brightness steps from being decreased.

## Claims

1. A video display apparatus comprising:
   a display device including a plurality of display cells (201 to 224, etc.) arranged in an X-Y matrix form;
   a video signal source (101 to 106) for supplying a digital video signal;
   a pulse width modulator (131 to 134, etc.) connected to said video signal source (101 to 106) for deriving a pulse width modulated signal corresponding to the brightness level of said digital video signal, said pulse width modulator (131 to 134, etc.) including a counter (133) supplied with said digital video signal as a datum signal and a clock signal generator (501) for supplying a clock signal to said counter (133); and

signal supplying means (113) connected to said pulse width modulator (131 to 134, etc.) for supplying said pulse width modulated signal to said display device and reproducing a picture thereon;
characterized by:
control means (116) connected to said clock signal generator (501) for changing the frequency of the clock signal supplied to the counter (133) to control the brightness of the picture reproduced on said display device.

2. A video display apparatus according to claim 1 wherein said control means (116) comprises a plurality of frequency dividers (502 to 505, 508, 509, 510 to 512) connected in cascade with said clock signal generator (501) and switching means (507) for selecting an output from one of said frequency dividers (502 to 505, 508, 509, 510 to 512) and supplying said output to said counter (133) as a clock signal.

3. A video display apparatus according to claim 1 wherein said counter (133) counts down the clock signal supplied thereto.

4. A video display apparatus acording to claim 3 wherein said pulse width modulator (131 to 134, etc.) further comprises latching means (506) for latching the digital video signal supplied from said video signal source (101 to 106), and means for supplying the latched video signal to said counter (133) as a preset datum thereof.

5. A video display apparatus according to claim 1 wherein said video signal source (101 to 106) comprises an analog to digital converter circuit (106) for converting an input analog video signal to a digital video signal.

## Revendications

1. Appareil d'affichage vidéo comprenant :
   un dispositif d'affichage incluant une pluralité de cellules d'affichage (201 à 224, etc...) agencées selon une forme matricielle X-Y ;
   une source de signal vidéo (101 à 106) pour acheminer un signal vidéo numérique ;
   un modulateur de largeur d'impulsion (131 à 134, etc...) connecté à ladite source de signal vidéo (101 à 106) pour commander un signal modulé en largeur d'impulsion qui correspond au niveau de luminosité dudit signal vidéo numérique, ledit modulateur de largeur d'impulsion (131 à 134, etc.. .) incluant un compteur (133) alimenté par ledit signal vidéo numérique en tant que signal de données et un générateur de signal d'horloge (501) pour acheminer un signal d'horloge audit compteur (133) ; et

un moyen d'acheminement de signal (113) connecté audit modulateur de largeur d'impulsion (131 à 134, etc...) pour acheminer ledit signal modulé en largeur d'impulsion audit dispositif d'affichage et pour reproduire une image dessus ;

caractérisé par :

un moyen de commande (116) connecté audit générateur de signal d'horloge (501) pour changer la fréquence du signal d'horloge acheminé au compteur (133) afin de commander la luminosité de l'image reproduite sur ledit dispositif d'affichage.

2. Appareil d'affichage vidéo selon la revendication 1, dans lequel ledit moyen de commande (116) comprend une pluralité de diviseurs de fréquence (502 à 505, 508, 509, 510 à 512) qui sont connectés en cascade avec ledit générateur de signal d'horloge (501) et un moyen de commutation (507) pour sélectionner une sortie qui provient d'un desdits diviseurs de fréquence (502 à 505, 508, 509, 510 à 512) et pour acheminer ladite sortie audit compteur (133) en tant que signal d'horloge.

3. Appareil d'affichage vidéo selon la revendication 1, dans lequel ledit compteur (133) effectue un comptage par décrémentation du signal d'horloge qui lui est acheminé.

4. Appareil d'affichage vidéo selon la revendication 3, dans lequel ledit modulateur de largeur d'impulsion (131 à 134, etc...) comprend en outre un moyen de bascule (506) pour verrouiller le signal vidéo numérique qui est acheminé depuis ladite source de signal vidéo (101 à 106) et un moyen pour acheminer le signal vidéo verrouillé audit compteur (133) en tant que données de pré-établissement de celui-ci.

5. Appareil d'affichage vidéo selon la revendication 1, dans lequel ladite source de signal vidéo (101 à 106) comprend un circuit convertisseur analogique/numérique (106) pour convertir un signal vidéo analogique d'entrée en un signal vidéo numérique.

**Patentansprüche**

1. Videoanzeiger, der umfaßt:

eine Anzeigeeinrichtung, die eine Vielzahl von Anzeigezellen (201 bis 224, usw.) enthält, welche in einer X-Y-Matrixform angeordnet sind,

eine Videosignalquelle (101 bis 106) zum Liefern eines digitalen Videosignals,

einen Impulsbreitenmodulator (131 bis 134, usw.), der mit der Videosignalquelle (101 bis 106) zum Ableiten eines impulsbreitenmodulierten Signals, das dem Helligkeitspegel des digitalen Videosignals enspricht, verbunden ist, wobei der Impulsbreitenmodulator (131 bis 134, usw.) einen Zähler (133), welcher mit dem digitalen Videosignal als ein Bezugsgrößensignal versorgt wird, und einen Taktsignalgenerator (501) zum Liefern eines Taktsignals an den Zähler (133) enthält, und

ein Signalzuführungsmittel (113), das mit dem Impulsbreitenmodulator (131 bis 134, usw.) zum Zuführen des impulsbreitenmodulierten Signals zu der Anzeigeeinrichtung und zum Wiedergeben eines Signals auf dem Bildschirm derselben verbunden ist,

**gekennzeichnet** durch

ein Steuermittel (116), das mit dem Taktsignalgenerator (501) zum Ändern der Frequenz des Taktsignals, das dem Zähler (133) zugeführt wird, um die Helligkeit des auf dem Bildschirm der Anzeigeeinrichtung wiedergegebenen Bildes zu steuern, verbunden ist.

2. Videoanzeiger nach Anspruch 1, bei dem das Steuermittel (116) eine Vielzahl von Frequenzteilern (502 bis 505, 508, 509, 510 bis 512), die in Kaskadenschaltung mit dem Taktsignalgenerator (501) verbunden sind, und ein Schaltmittel (507) zum Auswählen eines Augangssignals aus einem der Frequenzteiler (502 bis 505, 508, 509, 510 bis 512) und zum Liefern des Ausgangssignals an den Zähler als ein Taktsignal umfaßt.

3. Videoanzeiger nach Anspruch 1, bei dem der Zähler (133) das Taktsignal, das ihm zugeführt wird, herunterzählt.

4. Videoanzeiger nach Anspruch 3, bei dem der Impulsbreitenmodulator (131 bis 134, usw.) ferner ein Haltemittel (506) zum Halten des digitalen Videosignals, welches von der Videosignalquelle (101 bis 106) zugeführt ist, und ein Mittel zum Liefern des gehaltenen Videosignals an den Zähler (133) als eine voreingestellte Bezugsgröße desselben umfaßt.

5. Videoanzeiger nach Anspruch 1, bei dem die Videosignalquelle (101 bis 106) eine Analog/Digital-Wandlerschaltung (106) zum Umsetzen eines eingegebenen analogen Videosignals in ein digitales Videosignal umfaßt.

## FIG. 1

## FIG. 2

*F I G. 3*

*F I G. 5*

FIG. 4

## FIG. 6

## FIG. 9

FIG. 7

FIG. 8

## F I G. 10

## F I G. 11

*FIG. 12*

*FIG. 13A*

*FIG. 13B*

17

## FIG. 14

## FIG. 15

## FIG. 16

F I G. 17B

F I G. 17A

FIG. 18

EP 0 150 991 B1

# FIG. 19

**U1**

| | | | |
|-----|-----|-----|-----|
| 201 | 202 | 203 | 204 |
| 201′ | 202′ | 203′ | 204′ |
| 205 | 206 | 207 | 208 |
| 205′ | 206′ | 207′ | 208′ |
| 209 | 210 | 211 | 212 |
| 209′ | 210′ | 211′ | 212′ |

**U2**

| | | | |
|-----|-----|-----|-----|
| 213 | 214 | 215 | 216 |
| 213′ | 214′ | 215′ | 216′ |
| 217 | 218 | 219 | 220 |
| 217′ | 218′ | 219′ | 220′ |
| 221 | 222 | 223 | 224 |
| 221′ | 222′ | 223′ | 224′ |

# FIG. 22

UCK

131

133

113

132

134

FP

S1~S36

S38

EP 0 150 991 B1

FIG. 20A (FP)

FIG. 20B (UCK)

65μ
130μ
225

FIG. 20C (ECK)

1 2 3 ... 18 19 20 21 ... 36 37 38

19
38

FIG. 20D (SSP)

FIG. 20E

S1
S2
S36
S37
S38

FIG. 20F

FIG. 20G (SSP)

EP 0 150 991 B1

FIG. 21

EP 0 150 991 B1

FIG. 23

116

EP 0 150 991 B1